# EUROPÄISCHE PATENTSCHRIFT

(11) **EP 3 724 104 B1**
(45) Veröffentlichungstag und Bekanntmachung des Hinweises auf die Patenterteilung: **22.01.2025**
(21) Anmeldenummer: 18782429.7
(22) Anmeldetag: 04.10.2018
(51) Int. Cl.: B65G 15/52, B65G 17/04

(54) **SENKRECHTFÖRDERER**
VERTICAL CONVEYOR
CONVOYEUR VERTICAL

(30) Priorität: 14.12.2017 DE 102017222691
(43) Veröffentlichungstag der Anmeldung: 21.10.2020
(73) Patentinhaber: ContiTech Deutschland GmbH, 30175 Hannover (DE)
(72) Erfinder: LITZ, Friedhelm, 30419 Hannover (DE)
(74) Vertreter: Continental Corporation
(86) Internationale Anmeldenummer: PCT/EP2018/076963
(87) Internationale Veröffentlichungsnummer: WO 2019/115049

(56) Entgegenhaltungen:
- CH-A- 342 893
- DE-B- 1 101 274
- DE-C- 861 071
- GB-A- 2 237 255
- JP-U- S55 176 221

## Beschreibung

Die Erfindung betrifft einen Senkrechtförderer.

Aus dem Stand der Technik sind Förderbänder für einen Senkrechtförderer sowie die Senkrechtförderer als solches grundsätzlich bekannt. Ein Senkrechtförderer weist zwei Förderbänder auf, die zumindest im Wesentlichen parallel verlaufend zueinander angeordnet sind. Die Förderbänder dienen als Antriebsmittel für Mitnehmertaschen, die mittels stabförmiger Querträger an den beiden Förderbändern befestigt sind. Bei dem Senkrechtförderer sind also eine Vielzahl von stabförmigen Querträgern vorgesehen, die in einer Umfangsrichtung der Förderbänder hintereinander und voneinander beabstandet angeordnet sind. Vorzugsweise sind die Querträger in einem festen Rasterabstand zueinander angeordnet. Zwischen zwei Querträgern erstreckt sich jeweils eine der Mitnehmertaschen, die mit ihren jeweiligen Endabschnitten an den besagten Querträgern befestigt ist, so dass jede Mitnehmertaschen durchhängend zwischen den jeweils zugehörigen zwei Querträgern angeordnet ist. Ein Querabstand zwischen den beiden Förderbändern ist dabei vorzugsweise derart gewählt, dass sich jeder Querträger von einem Förderband zu dem anderen Förderband in Querrichtung erstreckt. Der Bereich zwischen den beiden Förderbändern kann zumindest im Wesentlichen frei ausgebildet sein, so dass hier die Mitnehmertaschen durchhängend angeordnet sind.

Die jeweilige Verbindung der Querträger mit den Förderbändern erfolgt durch sogenannte Tellerschrauben, die in das Förderband eingebunden sind. Die Schrauben erstrecken sich senkrecht aus der Gurtdecke eines jeden Förderbands heraus. Die Schrauben stehen also jeweils zumindest im Wesentlichen senkrecht auf der Tragseite des jeweiligen Förderbands. Mittels dieser Schrauben wird jeder der Querträger lösbar an den Förderbändern befestigt. Diese Befestigungsart weist jedoch Nachteile auf. So wurde in der Praxis festgestellt, dass sich die Verbindung der Schraubenköpfe zu den Förderbändern bei einer hohen Beanspruchung lösen kann, was zum Herausreißen der Schrauben führt. Hohe Beanspruchungen sind im praktischen Einsatz jedoch nicht unüblich. Der Austausch oder die Wiederherstellung des Förderbands mit einer entsprechenden Verbindung führt zu einem erheblichen Reparaturaufwand und einem Ausfall des zugehörigen Senkrechtförderers für die Reparaturzeit.

Die CH 342893 A offenbart einen Senkrechtförderer nach dem Oberbegriff des Anspruchs 1. Insbesondere beschreibt das Dokument einen Höhenförderer nach Art eines Becherwerkes, vorzugsweise für schleißendes und druckempfindliches Schüttgut, mit nach innen offenen Förderkammern an parallel laufenden endlosen Zugorganen, wobei die Förderkammern von einem endlosen, Taschen bildenden Gurt und an diesen sowie an den Zugorganen befestigten steifen Stützgliedern als formgebende Seitenwände gebildet sind.

Das JP S55176221 U beschreibt ein Transportband mit einer Quersteifigkeit. Ein Stahlstab wird zwischen zwei Verstärkungsgeweben oder -schnüren eingeschlossen und ein Deckgummi wird darauf aufgebracht, um die Struktur durch Vulkanisation zu verbinden. Der Erfindung liegt die Aufgabe zugrunde, einen Senkrechtförderer bereitzustellen, das bzw. der eine besonders robuste und zugleich lösbare Verbindung zwischen den Querträgern des Senkrechtförderers und dem Förderband erlaubt.

Die Aufgabe wird gelöst durch einen Senkrechtförderer mit den Merkmalen des Anspruchs 1.

Vorgesehen ist also ein Senkrechtförderer, wie weiter unten näher beschrieben werden wird, aufweisend ein erstes und ein zweites Förderband. Jedes Förderband weist Zugträger auf, die in das Förderband eingebettet und zur Übertragung von Zugkräften in einer Förderrichtung für das Förderband ausgebildet sind. Jedes Förderband weist außerdem eine von einer ersten Gummideckschicht gebildete Tragseite auf. Darüber hinaus weist jedes Förderband mehrere mit der ersten Gummideckschicht durch Vulkanisation stoffschlüssig verbundene Gummiblöcke auf. Die Gummiblöcke sind in Förderrichtung voneinander beabstandet in einer Reihe angeordnet. Außerdem weist jeder Gummiblock einen stabförmigen Stutzen auf, der sich von einem Verankerungsbereich aus dem Inneren des jeweiligen Gummiblocks zu einem aus diesem Gummiblock herausragenden Teil des jeweiligen Stutzens erstreckt, wobei der herausragende Teil des jeweiligen Stutzens einen Verbindungsbereich des zugehörigen Stutzens bildet.

Wie zuvor erläutert, ist es vorgesehen, dass jeder Gummiblock einen Stutzen aufweist. Dieser Stutzen ist stabförmig ausgebildet. Außerdem weist jeder Stutzen einen Verankerungsbereich und einen Verbindungsbereich auf. Der Verankerungsbereich des Stutzens eines Gummiblocks ist im Inneren des Gummiblocks angeordnet. Dabei ist es bevorzugt vorgesehen, dass der Verankerungsbereich des Stutzens eines Gummiblocks mit dem übrigen Material des Gummiblocks stoffschlüssig und vorzugsweise formschlüssig verbunden ist. Bis auf den Stutzen kann jeder Gummiblock aus einem Gummimaterial, insbesondere einem faserverstärkten Gummimaterial, gebildet sein. Das Gummimaterial ist dabei vorzugsweise derart ausgebildet, dass es an dem Verankerungsbereich haftet, insbesondere auch dann, wenn der Stutzen aus Metall, insbesondere Stahl, ist. Alternativ oder ergänzend kann ein Haftvermittler an einer Kontaktschicht zwischen dem Gummimaterial des Gummiblocks und dem Verankerungsbereich vorgesehen sein. Der Haftvermittler gewährleistet die bevorzugte, stoffschlüssige Verbindung zwischen dem Verankerungsbereich des Stutzens und dem Gummimaterial des Gummiblocks. Jeder der Gummiblöcke kann vorgefertigt sein. Außerdem ist es besonders bevorzugt vorgesehen, dass der Verankerungsbereich eines Stutzens eines zugehörigen Gummiblocks mantelseitig und stirnseitig von dem Gummimaterial des jeweiligen Gummiblocks umgeben ist, so dass das Gummimaterial in unmittelbaren Kontakt mit der mantelseitigen Flächen und der stirnseitigen Fläche des Verbindungsbereichs des jeweiligen Stutzens ist. Hier kann sich deshalb die vorteilhafte stoffschlüssige und vorzugsweise formschlüssige Verbindung zwischen dem Gummimaterial des jeweiligen Gummiblocks und des zugehörigen Stutzens ausbilden. Ein derartiger Gummiblock kann eine Grundseite aufweisen, die dazu dient und/oder ausgebildet ist, um mit der Gummideckschicht des jeweiligen Förderbands durch Vulkanisation stoffschlüssig verbunden zu werden. Werden nun eine Mehrzahl von derartigen Gummiblöcken mit der Gummideckschicht des jeweiligen Förderbands durch Vulkanisation stoffschlüssig verbunden, bietet dies den Vorteil, dass die Grundseite eines jeden Gummiblocks bzw. die korrespondierende Stoffschlussschicht besonders groß gewählt werden kann. Mit anderen Worten kann die Grundfläche der Grundseite eines jeden Gummiblocks derart groß gewählt werden, dass die betriebsmäßigen und/oder bestimmungsgemäßen Kräfte beim Einsatz des jeweiligen Förderbands sicher von dem jeweiligen Gummiblock an die Gummideckschicht und vorzugsweise von dieser an die Zugträger des jeweiligen Förderbands übertragbar sind.

Vorzugsweise ist der stabförmige Stutzen eines jeden Gummiblocks quer zur Förderrichtung des jeweiligen Förderbands ausgerichtet. Durch die Verwendung der Gummiblöcke, und insbesondere des zugehörigen Gummimaterials, ist es jedoch möglich, dass jeder Gummiblock ausreichend Material bzw. ein ausreichendes Gummimaterialvolumen aufweist, das eine Übertragung von Kräften, die in Förderrichtung auf einen zugehörigen Stutzen wirken, über das Gummimaterial des jeweiligen Gummiblocks an die Gummideckschicht und sodann an die Zugträger des jeweiligen Förderbands übertragbar sind. Vorzugsweise ist die Menge und/oder das Volumen des Gummimaterials eines jeden Gummiblocks derart gewählt, dass zumindest eine vorbestimmte, in Förderrichtung wirkende Kraft auf den zugehörigen Stutzen des Gummiblocks an die Gummideckschicht übertragbar ist, ohne dass es zu einer Zerstörung der durch Vulkanisation hergestellten stoffschlüssigen Verbindung zur Gummideckschicht kommt.

Besonders bevorzugt ist es vorgesehen, dass das Gummimaterial eines jeden Gummiblocks und das Gummimaterial der Gummideckschicht gleich oder zumindest im Wesentlichen gleich sind. Dies bietet den Vorteil, dass eine besonders feste stoffschlüssige Verbindung zwischen jedem Gummiblock und der Gummideckschicht gebildet werden kann. Denn jeder Gummiblock ist durch Vulkanisation stoffschlüssig mit der Gummideckschicht verbunden. Mit anderen Worten kann jeder Gummiblock auf die Gummideckschicht aufvulkanisiert sein. Dies gilt insbesondere dann, wenn jede der Gummiblöcke mit dem zugehörigen Stutzen zuvor vorgefertigt ist.

Wie bereits zuvor erläutert, ist es vorgesehen, dass jeder Stutzen stabförmig ist. Dabei ragt jeweils der stabförmige Verbindungsbereich des Stutzens eines jeden Gummiblocks, vorzugsweise quer zur Förderrichtung, aus dem Gummiblock heraus. Dieser Verbindungsbereich dient zum lösbaren Ankoppeln und/oder Verbinden eines Querträgers eines Senkrechtförderers. Deshalb kann jeder Verbindungsbereich auch zum kraftschlüssigen und/oder formschlüssigen Verbinden mit einem Querträger eines Senkrechtförderers ausgebildet sein.

Es hat sich als vorteilhaft herausgestellt, wenn der stabförmige Stutzen aus Metall, insbesondere Stahl, gebildet ist. So kann der stabförmige Stutzen beispielsweise als eine Stahlachse oder als ein Stahlstab ausgebildet sein. Anderes Material zur Herstellung des Stutzens ist jedoch auch denkbar. Die Verwendung des Materials kann dabei insbesondere von der Verwendung des jeweiligen Förderbands bzw. des Senkrechtförderers abhängen. So können beispielsweise auch andere Metalllegierungen und/oder faserverstärkte Kunststoffe für den Stutzen verwendet werden.

Das zuvor erläuterte Paar von Förderbändern bietet den Vorteil, dass jedes der beiden Förderbänder eines Senkrechtförderers von jeweils einem des zuvor erläuterten Förderbands gebildet sein kann. Die durch Vulkanisation stoffschlüssig mit der Gummideckschicht verbundenen Gummiblöcke und die zugehörigen Stutzen bieten dabei eine vorteilhafte Verbindungsbasis, um die Querträger mit den Förderbändern kraft- und/oder formschlüssig zu verbinden. Mittels der Querträger können besonders hohe Kräfte an die Förderbänder übertragen werden, wobei gleichzeitig eine hohe Robustheit, eine niedrige Ausfallwahrscheinlichkeit und zugleich eine hohe Modularität für den Senkrechtförderer gewährleistet werden können. Denn mittels der Gummiblöcke und dem zugehörigen, stabförmigen Stutzen wird nicht nur die Möglichkeit geschaffen, besonders hohe Kräfte quer zur Förderrichtung an die Gummideckschicht und die Zugträger des Förderbands zu übertragen, sondern die Verbindungsbereiche der Stutzen erlauben es auch, die Querträger lösbar mit den Stutzen zu verbinden. Dadurch wird eine Modularität für einen Senkrechtförderer geschaffen. Denn es können zumindest zwei im Wesentlichen gleiche Förderbänder verwendet werden. Auch die Querträger und die Mitnehmertaschen können jeweils entsprechend gleich ausgebildet sein. Darüber hinaus können gleichartige Verbindungsmittel verwendet werden, um die Querträger mit den Verbindungsbereichen der Stutzen der Gummiblöcke zu verbinden. Es können also eine Vielzahl von gleichen Bauteilen verwendet werden, um einen Senkrechtförderer herzustellen.

Bereits zuvor wurde auf die Deckschicht und die Zugträger des Förderbands eingegangen. Es ist bevorzugt vorgesehen, dass die Zugträger eine Vielzahl von Zugträgern sind. Jeder Zugträger kann dabei als ein Seil, insbesondere ein Cordseil, ausgebildet sein. Besonders bevorzugt ist jeder Zugträger als ein Metallseil, insbesondere ein Stahlseil, ausgebildet. Die Zuträger sind jedoch nicht notwendigerweise aus Metall. Vielmehr ist es ebenfalls besonders bevorzugt, dass jeder der Zugträger als Textil-Zugträger, als Kunststoff-Zugträger oder als Faserverbund-Zugträger ausgebildet ist. So kann jeder der Zugträger beispielsweise aus oder mit gerichteten Karbonfasern, wie Kevlarfasern, gebildet sein. Jeder der Zugträger erstreckt sich in Förderrichtung des Förderbands. Dabei kann es zu einer Überlappung der Enden der Zugträger kommen. Außerdem können die Zugträger parallel zueinander verlaufend ausgebildet und/oder angeordnet sein. Außerdem ist es bevorzugt vorgesehen, dass die Zugträger von Gummimaterial des Förderbands umgeben sind, so dass die Zugträger vollständig in das Gummimaterial des Förderbands eingebettet sind. Das Gummimaterial und die Zugträger sind dabei derart geformt bzw. angeordnet, dass das Förderband bandförmig oder gurtförmig ausgestaltet ist. Die Gummideckschicht kann dabei die äußere und insbesondere integral ausgebildete Schicht des Förderbands sein. Die Gummideckschicht ist besonders bevorzugt vollständig von dem Gummimaterial des Förderbands gebildet. Die Gummideckschicht bildet dabei eine Tragseite, da sie mit den Gummiblöcken stoffschlüssig verbunden ist und die Gummiblöcke trägt bzw. Kräfte von den Gummiblöcken an die Zugträger weiterleiten kann. Dazu ist die Gummideckschicht bzw. das Förderband besonders bevorzugt entsprechend ausgebildet.

Eine vorteilhafte Ausgestaltung des Senkrechtförderers zeichnet sich dadurch aus, dass jeder Gummiblock eine im Querschnitt glockenkurvenförmige und/oder gaußkurvenförmige Außenkontur aufweist. Alternativ oder ergänzend kann es vorgesehen sein, dass jeder Gummiblock eine zumindest im Wesentlichen parabelförmige Außenkontur, insbesondere mit kurvenförmig auslaufenden Fußenden, aufweist. Jeder Gummiblock kann eine Grundseite aufweisen, mit der der jeweilige Gummiblock durch Vulkanisation stoffschlüssig mit der Gummideckschicht des Förderbands verbunden ist. Diese Grundfläche ist vorzugsweise eben oder zumindest im Wesentlichen eben ausgebildet. Insbesondere das Gummimaterial über dieser Grundseite des jeweiligen Gummiblocks ist im Querschnitt glockenkurvenförmig, gaußkurvenförmig und/oder zumindest im Wesentlichen parabelförmig ausgebildet. Dies gewährleistet, dass die an den gegenüberliegenden Fußenden auslaufenden Bereiche des Gummiblocks kurvenförmig und/oder stetig abnehmen. Mit einem derartigen Gummiblock kann eine besonders große Grundfläche geschaffen werden. Außerdem wurde bei Untersuchungen festgestellt, dass mit einer derartigen Ausgestaltung des Gummiblocks besonders hohe Kräfte von einem Stutzen des jeweiligen Gummiblocks an die Gummideckschicht und sodann an die Zugträger des Förderbands übertragen werden können. Außerdem hat es sich als vorteilhaft erwiesen, wenn der Stutzen eines Gummiblocks im Querschnitt zumindest im Wesentlichen mittig angeordnet ist. Dies bietet den Vorteil, dass der Verankerungsbereich des Stutzens des jeweiligen Gummiblocks mit ausreichend Gummimaterial des Gummiblocks umgeben ist. Mit anderen Worten gewährleistet dies eine besonders zugfeste Einbettung des Verankerungsbereichs des genannten Stutzens in dem zugehörigen Gummiblock.

Eine weitere vorteilhafte Ausgestaltung des Senkrechtfördererszeichnet sich dadurch aus, dass die Gummiblöcke an einem Randbereich auf der Tragseite angeordnet sind. Der Randbereich ist dabei vorzugsweise ein umlaufender Bereich der Tragseite, der quer zur Förderrichtung an einer der querseitigen Enden anschließt. Die Gummiblöcke sind dabei jedoch nicht notwendigerweise unmittelbar an dem entsprechenden, umlaufenden Rand der Tragseite angeordnet. Vielmehr kann der Randbereich einen umlaufenden Bahnabschnitt der Tragseite repräsentieren, wo die Gummiblöcke in Förderrichtung voneinander beabstandet in einer Reihe angeordnet sind. So kann das Gummimaterial eines jeden Gummiblocks einen vorbestimmten Abstand zu einem gemeinsamen, querseitigen Rand der Tragseite aufweisen.

Eine vorteilhafte Ausgestaltung des Senkrechtfördererszeichnet sich dadurch aus, dass die Gummiblöcke derart angeordnet sind, dass jeder Stutzen in Querrichtung, also insbesondere einer Richtung quer zur Förderrichtung, nicht über einen Rand der Tragseite hinausragt. So kann es beispielsweise vorgesehen sein, dass die Stirnseite des Verbindungsbereichs eines jeden Stutzens fluchtend mit dem Rand der Tragseite ausgerichtet ist und/oder dass jeder Gummiblock derart angeordnet ist, dass die Stirnseiten der Verbindungsbereiche in Querrichtung zu dem Rand, insbesondere mit einem vorbestimmten Abstand, versetzt angeordnet sind, so dass die Stutzen in Querrichtung nicht über den Rand der Tragseite hinausragen.

Eine weitere vorteilhafte Ausgestaltung des Senkrechtfördererszeichnet sich dadurch aus, dass jeder Stutzen in Querrichtung über den Rand der Tragseite hinausragt. Dies kann unter Umständen eine besonders einfache Montage der Querträger eines Senkrechtförderers erlauben. Vorzugsweise ist die Querrichtung quer zur Förderrichtung des Förderbands ausgerichtet.

Eine vorteilhafte Ausgestaltung des Senkrechtfördererszeichnet sich dadurch aus, dass jeder Stutzen als ein Metallstutzen ausgebildet ist. Jeder Stutzen kann also aus Metall bestehen. Dies ist jedoch nicht notwendigerweise immer der Fall. Grundsätzlich kann der Stutzen auch aus einem anderen, insbesondere hochfesten, Material gebildet sein. Metallstutzen sind jedoch besonders stabil.

Eine weitere vorteilhafte Ausgestaltung des Senkrechtfördererszeichnet sich dadurch aus, dass der Verankerungsbereich eines jeden Stutzens abstehende Verankerungselemente aufweist, so dass zumindest eine formschlüssige Verbindung zwischen dem Verankerungsbereich des jeweiligen Stutzens und des, insbesondere übrigen, zugehörigen Gummiblocks gebildet ist. Die Verankerungselemente können beispielsweise in Radialrichtung von dem jeweiligen stabförmigen Stutzen hervorragen. Mittels der Verankerungselemente wird eine besonders zugfeste, formschlüssige Verbindung zwischen dem Verankerungsbereich des jeweiligen Stutzens und des zugehörigen, übrigen Gummiblocks geschaffen. Dies bezieht sich insbesondere auf das Gummimaterial des Gummiblocks. Außerdem kann mit den Verankerungselementen die Oberfläche des Verbindungsbereichs des jeweiligen Stutzens erhöht sein, so dass auch eine stoffschlüssige Verbindung zwischen dem jeweiligen Verbindungsbereich des zugehörigen Stutzens und dem übrigen Gummimaterial des zugehörigen Gummiblocks verbessert ist.

Eine weitere vorteilhafte Ausgestaltung des Senkrechtfördererszeichnet sich dadurch aus, dass der Verbindungsbereich eines jeden Stutzens zur formschlüssigen und/oder kraftschlüssigen Verbindung mit einem stabförmigen Querträger eines Senkrechtförderers ausgebildet ist. So kann beispielsweise die Außenkontur des Verbindungsbereichs eines zugehörigen Stutzens derart ausgebildet sein, dass eine kraft- und/oder formschlüssige Verbindung mit einem, vorzugsweise ebenfalls stabförmigen, Querträger ermöglicht ist. Außerdem kann der Verbindungsbereich eines jeden Stutzens mindestens eine Bohrung, insbesondere mindestens eine lichte Bohrung, aufweisen. Mittels dieser mindestens einen Bohrung kann beispielsweise eine kraft- und/oder formschlüssige Verbindung mit dem stabförmigen Querträger des Senkrechtförderers besonders einfach ausgebildet werden. Denn durch die zuvor genannte, mindestens eine Bohrung des Verbindungsbereichs eines jeden Stutzens können Schrauben geführt werden, die sodann auch eine Verbindung zu dem stabförmigen Querträger herstellen. Der Verbindungsbereich eines jeden Stutzens kann also dazu ausgebildet sein, um eine Schraubverbindung zu dem stabförmigen Querträger des Senkrechtförderers herzustellen.

Eine weitere vorteilhafte Ausgestaltung des Senkrechtfördererszeichnet sich dadurch aus, dass die Gummiblöcke in einem Rasterabstand mit äquidistanten und/oder vorbestimmten Abständen angeordnet sind. Jeweils zwei benachbarte Gummiblöcke können also jeweils den gleichen, insbesondere äquidistanten, Abstand zueinander aufweisen. Dies gilt vorzugsweise für jedes Paar von benachbarten Gummiblöcken. Auf diese Weise kann eine Rasteranordnung für die Gummiblöcke, insbesondere mit dem gewünschten Rasterabstand, erreicht werden. Eine derartige Ausgestaltung bietet den Vorteil, dass das Förderband für einen Senkrechtförderer eingesetzt werden kann, bei dem eine Vielzahl von gleichen Querträgern und eine Vielzahl von gleichen Mitnehmertaschen vorgesehen sind. Die Ausgestaltung des Förderbands gewährleistet also einen besonders modularen Aufbau für einen Senkrechtförderer.

Vorgesehen ist also erfindungsgemäß ein Senkrechtförderer, wie zuvor bereits erwähnt, der ein erstes und ein zweites Förderband aufweist. Jedes der Förderbänder kann ein Förderband sein, wie es zuvor und/oder einer der dazu erläuterten vorteilhaften Ausgestaltungen erläutert wurde. Für jedes der Förderbänder wird deshalb bevorzugt auf die zuvor erläuterten, vorteilhaften Ausgestaltungen, bevorzugten Merkmale, Vorteile und/oder Effekte, wie sie zuvor im Zusammenhang mit dem Förderband erläutert worden sind, in analoger Weise Bezug genommen. Der Senkrechtförderer weist außerdem eine Mehrzahl von stabförmigen Querträgern und eine Mehrzahl von Mitnehmertaschen auf. Das erste Förderband ist parallel zu dem zweiten Förderband angeordnet, so dass die Stutzen des ersten Förderbands und die Stutzen des zweiten Förderbands einander zugewandt und eine Vielzahl von Stutzenpaaren gebildet sind, wobei jedes Stutzenpaar von einem Stutzen des ersten Förderbands und einem Stutzen des zweiten Förderbands gebildet ist. Die Stutzen eines jeden Stutzenpaars sind zu einer zugehörigen, gemeinsamen Verbindungsachse ausgerichtet. Zwischen den Stutzen eines jeden Stutzenpaars ist jeweils einer der Querträger angeordnet und mit diesen Stutzen kraftschlüssig und/oder formschlüssig lösbar verbunden. Außerdem sind die Mitnehmertaschen an den Querträgern derart befestigt, dass sich von jedem Querträger zu einem benachbarten Querträger eine der Mitnehmertaschen durchhängend erstreckt.

Die parallele Anordnung der Förderbänder bietet den Vorteil, dass diese als zwei parallel zueinander verlaufende Förderbänder ausgebildet sein können. Ihre Tragseiten können dabei zumindest im Wesentlichen fluchtend zueinander angeordnet sein und/oder ausgerichtet sein. Außerdem ist es besonders bevorzugt vorgesehen, dass das erste und zweite Förderband, insbesondere mittels eines motorischen Antriebs, derart angetrieben sind, dass die Förderbänder mit der gleichen Geschwindigkeit in Förderrichtung und/oder synchron zueinander in Förderrichtung angetrieben sind.

Für die Querträger hat es sich jeweils als vorteilhaft erwiesen, wenn jeder der Querträger als ein Metall-Querträger ausgebildet ist. Jeder der Querträger kann beispielsweise teilweise oder vollständig aus Metall gebildet sein. So kann jeder Querträger beispielsweise im Inneren aus Metall gebildet sein, wobei das Metall mantelseitig, zumindest teilweise, mit einer Gummischicht bedeckt ist. Mit anderen Worten kann jeder Querträger als ein mit Gummi ummantelter Gummistab sein. Grundsätzlich ist es jedoch auch möglich, dass jeder der Querträger aus einem anderen Material, insbesondere einem festen und/oder hochfesten Material, gebildet ist. So kann jeder der Querträger teilweise oder vollständig von einem, insbesondere hochfesten, Faserverbundwerkstoff gebildet sein. Jeder der Querträger ist stabförmig ausgebildet. So kann jeder Querträger beispielsweise als ein Metallstab oder als ein Stahlstab ausgebildet sein.

Bei den Mitnehmertaschen handelt es sich vorzugsweise um gurtartige Mitnehmertaschen. Jede der Mitnehmertaschen kann beispielsweise von einem Gurt gebildet sein, der sich mit einem Ende von einem der Querträger zu dem anderen, gegenüberliegenden Ende an dem jeweils benachbarten Querträger erstreckt. Jede der Mitnehmertaschen kann als eine Gummi-Mitnehmertasche ausgebildet sein. Jede Mitnehmertasche kann also aus Gummi oder einem faserverstärkten Gummi gebildet sein. In Querrichtung zur Förderrichtung kann jede der Mitnehmertaschen geschlossen, offen und/oder zumindest teilweise offen oder teilweise geschlossen sein. Entlang der durchhängenden Kontur von einem Querträger zum benachbarten Querträger ist es bevorzugt vorgesehen, dass jede der Mitnehmertaschen geschlossen oder zumindest im Wesentlichen geschlossen ausgebildet ist. Durch die durchhängende Ausgestaltung einer jeden Mitnehmertasche wird vorzugsweise ein bauchförmiges Aufnahmevolumen zum Transport von einem Transportgut gebildet. Das Transportgut kann beispielsweise ein Schüttgut sein. Außerdem hat es sich als vorteilhaft erwiesen, wenn der Bereich zwischen jeweils zwei benachbarten Querträgern zu dem von der entsprechenden Mitnehmertaschen gebildeten Aufnahmevolumen offen ausgebildet ist. Durch die entsprechende Öffnung können die Mitnehmertaschen mit dem Schüttgut gefüllt werden oder umgekehrt durch die entsprechende Öffnung kann das Schüttgut aus der Mitnehmertaschen wieder abgegeben werden. Bei dem Senkrechtförderer handelt es sich vorzugsweise um einen Umlauf-Senkrechtförderer. Der Senkrechtförderer kann also dazu ausgebildet sein, das erste und zweite Förderband, insbesondere synchron, umlaufend anzutreiben. Damit können die Mitnehmertaschen an einer Stelle mit Schüttgut befüllt werden, und an einer anderen Stelle können die Mitnehmertaschen mittels der die Förderbänder, insbesondere an einer Umlenkstelle, derart geführt werden, dass die Mitnehmertaschen das Schüttgut wieder abgeben, insbesondere indem das Schüttgut durch die Erdanziehung und die zuvor erläuterten Öffnungen aus den Mitnehmertaschen wieder herausfällt.

Werden die Mitnehmertaschen mit Schüttgut befüllt, wirken auf die Querträger entsprechende Gewichtskräfte. Der Senkrechtförderer kann dazu ausgebildet sein, dass das erste und zweite Förderband zumindest abschnittsweise senkrecht oder schräg geführt und/oder angetrieben ist. In diesem Fall verursachen die Querträger in Förderrichtung auf die Stutzen der Förderbänder wirkende Kräfte. Diese Kräfte werden von den zugehörigen Gummiblöcken an die Gummideckschichten der Förderbänder und sodann an die Zugträger der Förderbänder übertragen. In diesem Zusammenhang wird auf die Vorteile der Gummiblöcke verwiesen, wie sie im Zusammenhang mit dem ersten Aspekt der Erfindung und den zugehörigen, vorteilhaften Ausgestaltungen erläutert worden sind. Die Gummiblöcke gewährleisten also, dass die in Förderrichtung wirkenden Kräfte an die Zugträger der Förderbänder übertragbar sind, ohne dass es zu einer Zerstörung oder einem Defekt der Förderbänder, insbesondere der stoffschlüssigen Verbindung zwischen den Gummiblöcken und der Deckschichten der Förderbänder, kommt. Mit anderen Worten gewährleisten die Förderbänder eine besonders robuste Ausgestaltung eines Senkrechtförderers.

Als besonders vorteilhaft hat es sich erwiesen, wenn das erste Förderband und das zweite Förderband gleich oder sogar identisch ausgestaltet sind. Dabei kann das zweite Förderband spiegelsymmetrisch zu dem ersten Förderband angeordnet sein. Dies gewährleistet die Ausrichtung der Stutzen eines jeden Stutzenpaars, nämlich zu einer zugehörigen, gemeinsamen Verbindungsachse. Unter der Verbindungsachse soll dabei nicht notwendigerweise eine konstruktive oder materialbedingte Achse verstanden werden. Vielmehr wird unter der Verbindungsachse vorzugsweise eine geometrische oder gedachte Verbindungsachse verstanden. Die Stutzen eines jeden Stutzenpaars sind also vorzugsweise zu einer zugehörigen gemeinsamen, gedachten Verbindungsachse ausgerichtet angeordnet. Besonders bevorzugt sind die Stutzen eines jeden Stutzenpaars zumindest im Wesentlichen koaxial zueinander ausgerichtet und/oder angeordnet. Mit anderen Worten kann die gemeinsame Ausrichtung zu einer Verbindungsachse, insbesondere gedachten Verbindungsachse, gewährleisten, dass eine zumindest im Wesentlichen koaxiale Ausrichtung der zueinander zugewandten Stutzen eines jeden Stutzenpaars erreicht wird.

Ein Querabstand zwischen den beiden Förderbändern ist dabei vorzugsweise derart gewählt, dass sich jeder Querträger von einem Förderband zu dem anderen Förderband in Querrichtung erstreckt. Der Bereich zwischen den beiden Förderbändern kann zumindest im Wesentlichen frei ausgebildet sein, so dass hier die Mitnehmertaschen durchhängend angeordnet sind.

Eine vorteilhafte Ausgestaltung des Senkrechtförderers zeichnet sich dadurch aus, dass die Verbindungen zwischen den Querträgern und den Stutzen als Schraubenverbindungen ausgestaltet sind. Jeder der Querträger kann also mit den Stutzen eines Stutzenpaars mittels Schrauben kraftschlüssig und formschlüssig verbunden sein. Dadurch wird eine Schraubenverbindung geschaffen. Jede dieser Verbindungen ist vorzugsweise lösbar ausgebildet. Die Schraubenverbindungen können also auch als lösbare Schraubenverbindungen ausgebildet sein. Die Verwendung von Schrauben zur Verbindung der Querträger mit den Stutzen bietet den Vorteil, dass einzelne Querträger und/oder Mitnehmertaschen besonders einfach und schnell ausgewechselt werden können. Aber auch bei der ersten Montage des Senkrechtförderers bieten die Schraubenverbindungen einen besonderen Vorteil. Denn nicht selten werden Senkrechtförderer erst am Bestimmungsort vollständig montiert. Jedes der Förderbänder, die Querträger und die Mitnehmertaschen können deshalb besonders einfach und/oder mit sehr kompakten Ausmaßen zum Bestimmungsort transportiert werden. Darüber hinaus bieten die Schraubenverbindungen den Vorteil, dass die Anzahl von unterschiedlichen Bauteilen zur Montage des Senkrechtförderers besonders klein gehalten werden kann. Denn für jede Verbindung zwischen einem Querträger und einem Stutzen können die gleichen Schrauben verwendet werden.

Eine weitere vorteilhafte Ausgestaltung des Senkrechtförderers zeichnet sich dadurch aus, dass jedes Ende eines Querträgers und der gegenüberliegend angeordnete Verbindungsbereich des zugehörigen Stutzens mittels einer Hülse gekoppelt sind, die mit dem jeweiligen Ende des Querträgers und dem jeweiligen Verbindungsbereich des zugehörigen Stutzens, insbesondere mittels Schrauben, lösbar verbunden ist. Jede Hülse kann also als ein Verbindungsmittel zwischen einem Stutzen und einem Querträger dienen. Eine Hülse ist vorzugsweise als ein rohrförmiges Bauteil ausgebildet. Durch die Mantelwandung einer Hülse können Bohrungen führen. Diese Bohrungen können derart ausgebildet und/oder ausgerichtet sein, dass sie fluchtend zu Bohrungen an einem Ende eines Querträgers und Bohrungen im Verbindungsbereich eines Stutzens ausgerichtet sind. Die fluchtend zueinander ausgerichteten Bohrungen bieten deshalb die Möglichkeit, dass durch diese Schrauben geführt werden, um die kraftschlüssige und formschlüssige Verbindung sowohl zwischen einem Stutzen und der Hülse als auch zwischen dem Ende eines Querträgers und der Hülse zu bilden und/oder zu gewährleisten. Die Schrauben und die Hülse können also gemeinsam als Verbindungsmittel zwischen einem Stutzen und einem Querträger dienen und/oder dazu entsprechend ausgebildet sein. Deshalb ist es besonders bevorzugt vorgesehen, dass jede Hülse als ein Überwurfring ausgebildet ist. Jede Hülse kann dabei als eine Metallhülse bzw. ein Metall-Überwurfring ausgebildet sein. Grundsätzlich kann jede Hülse auch aus einem anderen, insbesondere hochfesten, Material ausgebildet sein. Als besonders vorteilhaft hat es sich erwiesen, wenn jede Hülse als eine Stahl-Hülse ausgebildet ist.

Für den Senkrechtförderer ist eine Mehrzahl von stabförmigen Querträgern vorgesehen. Es ist deshalb ebenfalls bevorzugt vorgesehen, dass für den Senkrechtförderer eine Mehrzahl von Hülsen vorgesehen ist. Insbesondere ist es bevorzugt vorgesehen, dass jeder Senkrechtförderer doppelt so viele Hülsen wie Querträger aufweist. Somit kann jedes Ende eines Querträgers mittels einer Hülse an dem stirnseitig gegenüberliegenden Verbindungsbereich eines Stutzens befestigt werden. Vorzugsweise übergreift jeweils eine Hülse ein Ende eines Querträgers und den gegenüberliegend angeordneten Verbindungsbereich des jeweiligen Stutzens. Mittels der Hülse kann deshalb eine vorläufige, formschlüssige Verbindung bei der Montage besonders einfach und sicher erreicht werden. Die anschließende kraftschlüssige Verbindung kann sodann mittels Schrauben gewährleistet werden.

Eine vorteilhafte Ausgestaltung des Senkrechtförderers zeichnet sich dadurch aus, dass die Enden der Querträger und die Verbindungsbereiche der Stutzen jeweils zumindest im Wesentlichen den gleichen Querschnitt aufweisen. Somit kann jedes Ende eines Querträgers zu einer Stirnseite eines gegenüberliegend angeordneten Verbindungsbereichs eines Stutzens angeordnet werden. Die Hülse kann dabei derart angeordnet sein, dass sie sowohl das zuvor genannte Ende des Querträgers als auch das gegenüberliegende Ende des Verbindungsbereichs des Stutzens übergreift. Besonders bevorzugt entspricht die Innenform und/oder der Innendurchmesser der Hülse der Außenform des Endes des Querträgers bzw. des gegenüberliegend angeordneten Verbindungsbereichs des Stutzens. Der Innendurchmesser der Hülse kann zumindest im Wesentlichen dem Außendurchmesser des Endes des Querträgers bzw. des gegenüberliegenden angeordneten Stutzens, insbesondere mit einem Übermaß von maximal 5 mm, entsprechen.

Eine weitere vorteilhafte Ausgestaltung des Senkrechtförderers zeichnet sich dadurch aus, dass jedes Ende eines Querträgers und der gegenüberliegend angeordnete Verbindungsbereich des zugehörigen Stutzens formschlüssig ineinandergesteckt sind sowie kraftschlüssig und/oder formschlüssig, insbesondere mittels Schrauben, miteinander verbunden sind. Die Enden eines Querträgers können also zunächst auf die Stutzen eines Stutzenpaars gesteckt werden. Jedes Ende eines Querträgers weist vorzugsweise Bohrungen auf. Auch der Verbindungsbereich eines Stutzens weist Bohrungen auf. Die Bohrungen können fluchtend zueinander ausgerichtet angeordnet sein. Dies gilt insbesondere dann, wenn ein entsprechendes Ende eines Querträgers auf den Verbindungsbereich eines Stutzens formschlüssig aufgesteckt ist. Jedes Ende eines Querträgers kann dabei von einer Hülse ringförmig umfasst sein. Die Hülse kann ebenfalls Bohrungen aufweisen. Diese Bohrungen sind vorzugsweise fluchtend zu den Bohrungen des entsprechenden Endes des Querträgers ausgerichtet. Somit können die Bohrungen einer Hülse, eines Endes eines Querträgers und die Bohrungen eines Verbindungsbereichs des Stutzens fluchtend zueinander angeordnet sein. Durch diese Bohrungen können Schrauben führen. Mittels der Schrauben kann die kraftschlüssige und formschlüssige Verbindung zwischen dem jeweiligen Ende eines Querträgers und dem Verbindungsbereich eines Stutzens hergestellt sein. Grundsätzlich ist es jedoch auch denkbar, dass die entsprechende Schraubenverbindung ohne eine Hülse ausgeführt ist. So können Schrauben durch die fluchtend zueinander angeordneten Bohrungen eines Endes eines Querträgers und des Verbindungsbereichs eines Stutzens geführt werden. Diese Schrauben dienen sodann zur Herstellung der kraftschlüssigen und formschlüssigen Verbindung zwischen dem jeweiligen Ende des Querträgers und des Verbindungsbereichs des Stutzens.

Sofern ein Ende eines Querträgers auf den Verbindungsbereich eines Stutzens formschlüssig aufgesteckt ist, ist es bevorzugt vorgesehen, dass die Außenform und/oder der Außendurchmesser des Verbindungsbereichs des Stutzens der Innenform und/oder zu dem Innendurchmesser des jeweiligen Endes des Querträgers korrespondiert und/oder diesem zumindest im Wesentlichen entspricht, gegebenenfalls mit einem Übermaß von bis zu 5 mm so dass ein besonders einfaches Aufstecken ermöglicht wird.

An dieser Stelle sei noch darauf hingewiesen, dass der Senkrechtförderer zusätzlich zu dem ersten und zweiten Förderband noch mindestens ein weiteres Förderband aufweisen kann. So kann beispielsweise ein drittes Förderband vorgesehen sein, dass zumindest im Wesentlichen analog zu dem ersten Förderband ausgebildet ist. Somit kann der Senkrechtförderer in Bezug auf das zweite und dritte Förderband zumindest analog zu dem ersten und zweiten Förderband ausgebildet sein. Außerdem können analoge Ausgestaltungen im Hinblick auf entsprechende Querträger und Mitnehmertaschen vorgesehen sein. Da aber ein derartiger Senkrechtförderer auch zumindest das erste und zweite Förderband aufweist, wird im Folgenden hierauf eingegangen.

Weitere Merkmale, Vorteile und/oder Anwendungsmöglichkeiten der vorliegenden Erfindung ergeben sich aus der nachfolgenden Beschreibung der Ausführungsbeispiele und/oder den Figuren.

In den Figuren stehen weiterhin gleiche Bezugszeichen für gleiche oder ähnliche Objekte.
- Fig. 1: zeigt eine vorteilhafte Ausgestaltung eines Abschnitts eines Senkrechtförderers in einer schematischen Draufsicht.
- Fig. 2: zeigt einen Abschnitt des Senkrechtförderers in einer schematischen Querschnittsansicht.
- Fig. 3: zeigt einen Ausschnitt von zwei parallel zueinander angeordneten Förderbändern in einer schematischen Draufsicht.
- Fig. 4: zeigt den Ausschnitt der Förderbänder in einer schematischen Querschnittsansicht.
- Fig. 5: zeigt einen Ausschnitt eines Verbindungsbereichs zwischen einem Förderband und einem Querträger einer Fördervorrichtung in einer schematischen Draufsicht.
- Fig. 6: zeigt den Ausschnitt aus Fig. 6 in einer schematischen Querschnittsansicht.
- Fig. 7: zeigt einen Abschnitt eines Förderbands mit einem Gummiblock in einer schematischen Querschnittsansicht.
- Fig. 8: zeigt den Übergangsbereich zwischen einem Gummiblock und einem Abschnitt eines Querträgers in einer schematischen Draufsicht.
- Fig. 9 bis 12: zeigen jeweils vorteilhafte Außenkonturen für einen Gummiblock in einer schematischen Querschnittsansicht.

Bevor im Weiteren auf die einzelnen Figuren eingegangen wird, wird darauf hingewiesen, dass vorteilhafte Ausgestaltungen, bevorzugte Merkmale, Effekte und/oder Vorteile, wie sie für das erste Förderband 36 oder das zweite Förderband 38 beschrieben werden, zumindest in analoger Weise auch für ein Förderband 2 gelten können. Wenn also das erste und zweite Förderband 36, 38 zusammen erläutert werden und/oder wenn auf eines des ersten und zweiten Förderbands 36, 38 eingegangen wird, so ist es bevorzugt vorgesehen, dass das Förderband 2 dazu ausgebildet sein kann, entsprechende Verbindungen, bevorzugte Ausgestaltungen, vorteilhafte Merkmale aufweisen.

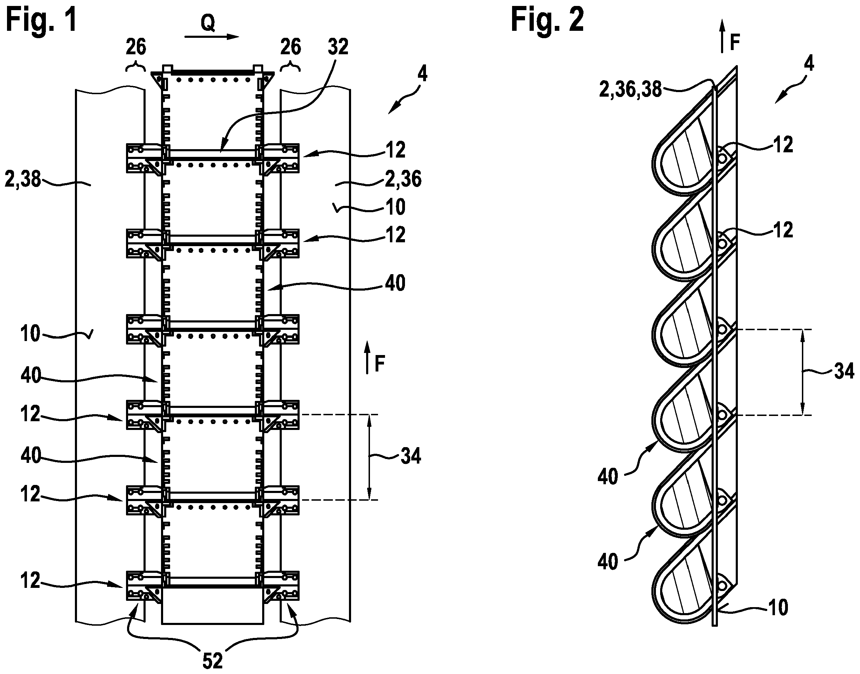

In der Fig. 1 ist eine vorteilhafte Ausgestaltung des Senkrechtförderers 4 abschnittsweise und schematisch in einer Draufsicht dargestellt. Der Senkrechtförderer 4 weist ein erstes Förderband 36 und ein zweites Förderband 38 auf.

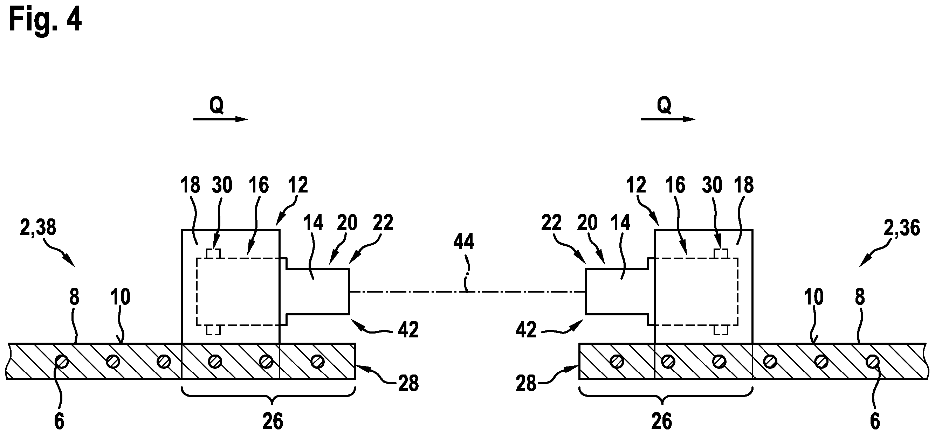

Jedes Förderband 2, 36, 38 weist Zugträger 6 auf. In diesem Zusammenhang wird auf die Fig. 4 beispielhaft verwiesen. In der Fig. 4 sind das erste Förderband 36 und das zweite Förderband 38 in einer schematischen Querschnittsansicht gezeigt. Daraus ist zu entnehmen, dass die Zugträger 6 eines jeweiligen Förderbands 2, 36, 38 in das zugehörige Förderband 2, 36, 38 eingebettet sind. Jedes der Zugträger 6 ist zur Übertragung von Zugkräften in einer Förderrichtung F für das jeweilige Förderband 3, 36, 38 ausgebildet. Dabei ist es bevorzugt vorgesehen, dass die Zugträger 6 des jeweiligen Förderbands 2, 36, 38 in ein Gummimaterial des jeweiligen Förderbands 2, 36, 38 eingebettet sind. Somit wird auch von dem Gummimaterial eines jeweiligen Förderbands 2, 36, 38 eine Gummideckschicht 8 gebildet. Diese Gummideckschicht 8 wird auch als erste Gummideckschicht 8 bezeichnet. Jede Gummideckschicht 8 bildet eine Tragseite 10 des jeweiligen Förderbands 2, 36, 38.

Außerdem ist es für jedes Förderband 2, 36, 38 vorgesehen, dass mehrere mit der Gummideckschicht 8 durch Vulkanisation und/oder durch Aufvulkanisation stoffschlüssig verbundene Gummiblöcke 12 vorgesehen sind.

Wie es beispielhaft aus der Fig. 1 hervorgeht, ist es dabei vorgesehen, dass die Gummiblöcke 12 eines jeweiligen Förderbands 2, 36, 38 in Förderrichtung F voneinander beabstandet in einer Reihe angeordnet sind. Als vorteilhaft hat es sich erwiesen, wenn die Gummiblöcke 12 eines jeweiligen Förderbands 2, 36, 38 in einem vorbestimmten Rasterabstand mit zumindest im Wesentlichen gleichen Abständen 34 angeordnet sind. Für die Gummiblöcke 12 eines jeden Förderbands 2, 36, 38 ist also eine Rasteranordnung vorgesehen. Aus der schematischen Querschnittsansicht der Fig. 2 ist ebenfalls die bevorzugte Anordnung der Gummiblöcke 12 eines jeweiligen Förderbands 2, 36, 38 zu entnehmen.

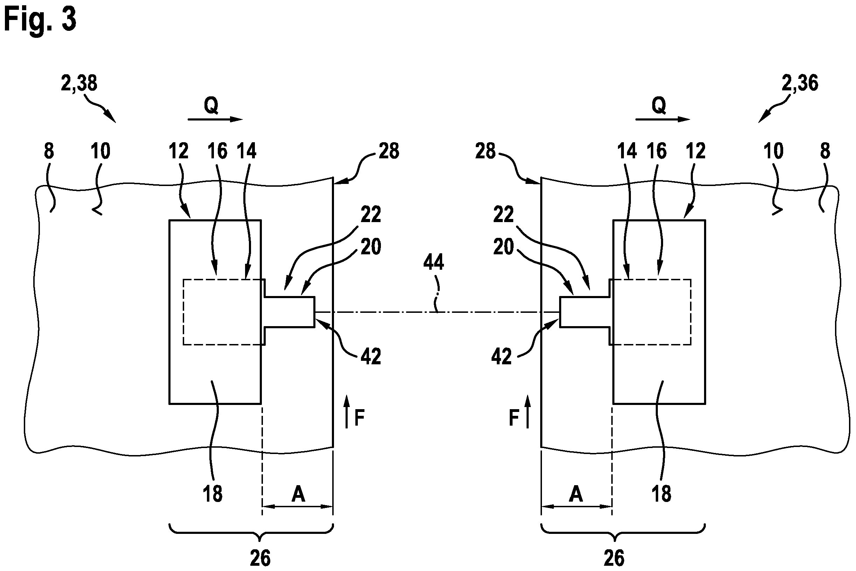

Jeder Gummiblock 12 weist einen stabförmigen Stutzen 14 auf. In diesem Zusammenhang wird auf die Fig. 3, 4, 5, 6, 7 und 8 verwiesen. Sie zeigen zumindest auch jeweils mindestens einen Gummiblock 12 in einer schematischen Ansicht. Bei jedem stabförmigen Stutzen 12 handelt es sich vorzugsweise um einen aus Stahl gefertigten Stutzen 12. Jeder Stutzen 12 kann deshalb auch als Stahlachsenstutzen bezeichnet sein. Jeder Stutzen 12 weist einen Verankerungsbereich 16 und einen Verbindungsbereich 22 auf. Der Verankerungsbereich 16 eines Stutzens 14 eines Gummiblocks 12 ist im Inneren 18 des zugehörigen Gummiblocks 12 angeordnet. Der aus diesem Inneren 18 des zugehörigen Gummiblocks 12 herausragende Teil 20 des jeweiligen Stutzens 14 bildet den Verbindungsbereich 22 des jeweiligen Stutzens 14. Vorzugsweise sind der Verankerungsbereich 16 und der Verbindungsbereich 22 eines Stutzens 14 koaxial zueinander angeordnet und/oder ausgebildet. Außerdem ist es bevorzugt vorgesehen, dass jeder Stutzen 14 einteilig und/oder einstückig ausgebildet ist.

Es ist bevorzugt vorgesehen, dass der Verankerungsbereich 16 eines Stutzens 14 mit dem Gummimaterial des zugehörigen Gummiblocks 12 verbunden ist. Dabei ist es bevorzugt vorgesehen, dass jeder Gummiblock 12 bis auf den zugehörigen Stutzen 14 aus Gummimaterial gebildet ist. Indem der Verankerungsbereich 16 eines Stutzens 14 im Inneren 18 des Gummiblocks 12 angeordnet ist, besteht also eine unmittelbare Verbindung zwischen dem Verankerungsbereich 16 des jeweiligen Stutzens 14 und dem Gummimaterial des Gummiblocks 12. Dabei ist es bevorzugt vorgesehen, dass eine stoffschlüssige Verbindung zwischen dem Verankerungsbereich 16 und dem Gummimaterial des jeweiligen Gummiblocks 12 ausgebildet ist. Besonders bevorzugt ist es außerdem vorgesehen, dass jeder Verbindungsbereich 16 Verankerungselemente 30 aufweist. Diese sind beispielhaft in der Fig. 4 gezeigt. Die Verankerungselemente 30 können sich radial außenseitig zu dem übrigen Verankerungsbereich 16 erstrecken. Insbesondere sofern der Verankerungsbereich 16 eines Stutzens 14 auch Verankerungselemente 30 aufweist, ist es bevorzugt vorgesehen, dass der jeweilige Stutzen 14 außerdem formschlüssig mit dem Gummimaterial des zugehörigen Gummiblocks 12 verbunden ist.

Wie es beispielhaft aus den Fig. 3 und 4 zu entnehmen ist, ist es bevorzugt vorgesehen, dass sich jeder Verbindungsbereich 22 eines zugehörigen Gummielements 12 in Querrichtung Q hervorsteht und/oder hervorspringend zu dem jeweiligen Gummiblock 12 im Übrigen ausgebildet ist. Der jeweilige Verbindungsbereich 22 eines jeden Gummiblocks 12 ragt also in Querrichtung Q über den übrigen Gummiblock 12 heraus. Der Verbindungsbereich 22 ist also dazu ausgebildet, um mit einem anderen Bauteil verbunden zu werden. Dies ist auch vorgesehen. Denn jeder Verbindungsbereich 22 ist bevorzugt dazu ausgebildet, um mit einem stabförmigen Querträger 32 des Senkrechtförderers 4 formschlüssig und/oder kraftschlüssig verbunden zu werden. Hierzu kann jeder Verbindungsbereich 22 entsprechend ausgebildet sein.

Bevor jedoch weiter auf den Senkrechtförderer 4 eingegangen wird, soll zunächst die vorteilhafte Außenform eines jeden Gummiblocks 12 und die stoffschlüssige Verbindung zu der hier zugehörigen Gummideckschicht 8 erörtert werden.

Wie zuvor erläutert und beispielhaft aus der Fig. 4 zu entnehmen ist, ist jeder Gummiblock 12 auf der Gummideckschicht 8 des zugehörigen Förderbands 2, 36, 38 angeordnet und mit dieser Gummideckschicht 8 stoffschlüssig verbunden. Diese stoffschlüssige Verbindung ist eine durch Vulkanisation hergestellte Verbindung. Mit anderen Worten ist jeder Gummiblock 12 eines Förderbands 2, 36, 38 auf die zugehörige Gummideckschicht 8 aufvulkanisiert. Dabei kann es vorgesehen sein, dass jeder Gummiblock 12 als ein vorgefertigter Gummiblock 12 ausgebildet ist.

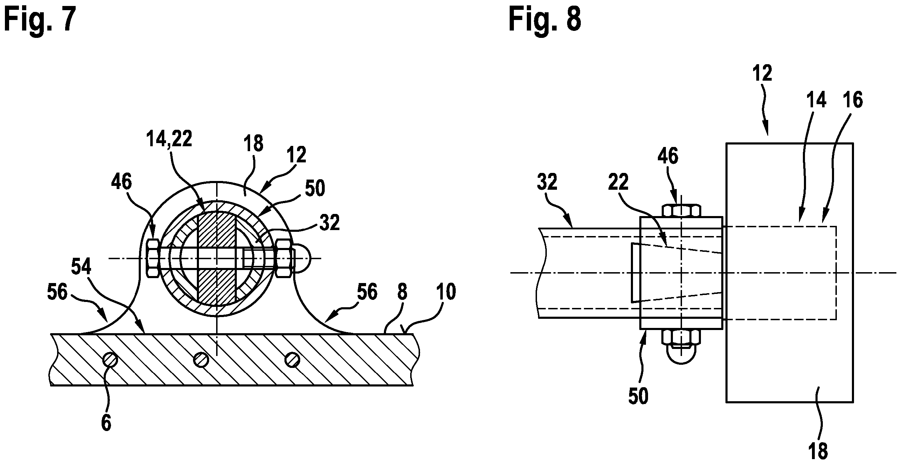

Wie es beispielhaft aus der Fig. 7 zu entnehmen ist, kann jeder Gummiblock 12 eine zumindest im Wesentlichen ebene Grundseite 54 aufweisen. Mit der Grundseite 54 hat jeder Gummiblock 12 unmittelbaren Kontakt zu der Gummideckschicht 8 des zugehörigen Förderbands 2, 36, 38. Am Übergang von dieser Grundseite 54 eines jeweiligen Gummiblocks 12 zu der Gummideckschicht 8 ist eine durch Vulkanisation stoffschlüssige Verbindung ausgebildet. Dabei ist es bevorzugt vorgesehen, dass das Gummimaterial der Gummideckschicht 8 des Förderbands 2, 36, 38 und das Gummimaterial des jeweiligen Gummiblocks 12 gleich oder zumindest im Wesentlichen gleich ist. Dies bietet den Vorteil, dass eine besonders zugfeste, durch Vulkanisation stoffschlüssige Verbindung erreichbar ist.

Die Zugfestigkeit der durch Vulkanisation hergestellten stoffschlüssigen Verbindung zwischen der Gummideckschicht 8 und dem jeweiligen Gummiblock 12 hängt jedoch auch von der Größe der Grundfläche der Grundseite 54 ab. Um diese möglichst groß zu gestalten, ist es bevorzugt vorgesehen, dass jeder Gummiblock 12 im Querschnitt glockenkurvenförmig und/oder gaußkurvenförmig, und/oder zumindest im Wesentlichen parabelförmig, insbesondere mit kurvenförmig auslaufenden Fußenden 56, ausgebildet ist.

Durch die stoffschlüssige Verbindung zwischen der Gummideckschicht 8 eines jeweiligen Förderbands 2, 36, 38 und den Gummiblöcken 12 des zugehörigen Förderbands 2, 36, 38 kann gewährleistet werden, dass die jeweilige stoffschlüssige Verbindung besonders robust zur Übertragung von Kräften in Förderrichtung F ist. Dies gilt insbesondere dann, wenn die Grundseite 54 ausreichend groß gewählt ist. Es ist deshalb bevorzugt vorgesehen, dass die Grundseite 54 eine Größe aufweist, die zur Übertragung von vorbestimmten Maximalkräften, die auf einen Stutzen 14 eines zugehörigen Gummiblocks 12 maximal in Förderrichtung F wirken können, ausgebildet ist. Entsprechendes kann für das übrige Gummimaterial des zugehörigen Gummiblocks 12 gelten. So kann es bevorzugt vorgesehen sein, dass jeder Gummiblock 12 eine derart ausreichende Menge um den Verankerungsbereich 16 eines zugehörigen Stutzens 12 aufweist, so dass eine ummantelnde Anordnung von Gummimaterial gebildet ist, die dazu ausgebildet ist, um die zuvor erläuterte, vorbestimmte Maximalkraft an die Deckschicht 8 des zugehörigen Förderbands 2, 36, 38 zu übertragen.

Im Folgenden wird auf die Fig. 1, 3, 4, 5 und 6 verwiesen. Denn aus den genannten Figuren geht rein beispielhaft hervor, dass die Gummiblöcke 12 an einem Randbereich 26 auf der Tragseite 10 des zugehörigen Förderbands 2, 36, 38 angeordnet sind. Hierbei handelt es sich vorzugsweise um einen querseitigen Randbereich 26. Der jeweilige Randbereich 26 kann sich also von einem Rand 28 des zugehörigen Förderbands 2, 36, 38 in Querrichtung Q erstrecken. Dabei ist bevorzugt vorgesehen, dass die mehreren, hintereinander und voneinander beabstandet angeordneten Gummiblöcke 12 derart in einer Reihe angeordnet sind, dass sich jeder der zugehörigen Stutzen 14 und/oder zugehörigen Verbindungsbereiche 22 in Querrichtung Q erstreckt.

Weiterhin kann es bevorzugt vorgesehen sein, dass jeder der Stutzen in einem vorbestimmten Abstand A zu dem zuvor genannten Rand 28 angeordnet ist. Der Abstand A kann sich dabei jeweils auf den Abstand zwischen dem Rand 28 und der Seite des Gummiblocks 12 beziehen, über die der jeweilige Verbindungsbereich 22 hervorsteht. Dabei ist es besonders bevorzugt vorgesehen, dass sich jeder Verbindungsbereich 22 in Querrichtung Q über eine kleinere Länge erstreckt als der zuvor genannte Abstand A. Dies gewährleistet, dass keiner der Verbindungsbereiche 22 über den Rand 28 hinausragt.

In der Fig. 1 ist ein Ausschnitt eines Senkrechtförderers 4 in einer schematischen Draufsicht gezeigt. In der Fig. 2 ist eine entsprechende Querschnittsdarstellung schematisch wiedergegeben. Grundsätzlich kann es jedoch vorgesehen sein, dass ein Senkrechtförderer 4 darüber hinaus auch eine Führungseinheit und/oder eine Antriebseinheit aufweist. Die Führungseinheit kann zum Führen und/oder Umlenken des ersten und zweiten Förderbands 36, 38 ausgebildet und/oder angeordnet sein. Die Antriebseinheit kann dazu ausgebildet und/oder angeordnet sein, um das erste und zweite Förderband 36, 38 synchron anzutreiben. Dadurch kann gewährleistet werden, dass die beiden angetriebenen Förderbänder 36, 38 ihre Bewegung auf die Querträger 32 und deshalb auch auf die Mitnehmertaschen 40 übertragen.

Wie aus der Fig. 1 rein beispielhaft zu entnehmen ist, ist das erste Förderband 36 parallel und beabstandet zu dem zweiten Förderband angeordnet. Es ist deshalb auch bevorzugt vorgesehen, dass das erste und zweite Förderband 36, 38 synchron angetrieben werden. Dies erlaubt es, dass die Querträger 32 in Förderrichtung F ebenfalls entsprechend synchron bewegt bzw. angetrieben werden. Entsprechendes kann für die Mitnehmertaschen 40 gelten.

Die parallele Ausrichtung des ersten Förderbands 36 zu dem zweiten Förderband 38 ist bevorzugt derart ausgestaltet, so dass die Stutzen 14 des ersten Förderbands 36 und die Stutzen 14 des zweiten Förderbands 38 einander zugewandt sind und eine Vielzahl von Stutzenpaaren 40 gebildet ist. Korrespondierendes kann für die Gummiblöcke 12 gelten. Auch hier können Gummiblockpaare 52 gebildet sein, wie es in Fig. 1 beispielhaft gezeigt ist.

Ein Stutzenpaar 40 ist beispielhaft in Fig. 3 bzw. in Fig. 4 gezeigt. Die Fig. 3 und 4 korrespondieren vorzugsweise zueinander. Fig. 3 zeigt einen Ausschnitt des ersten Förderbands 36 und des zweiten Förderbands 38 in einer schematischen Draufsicht. Eine entsprechende Querschnittsansicht ist in der Fig. 4 wiedergegeben.

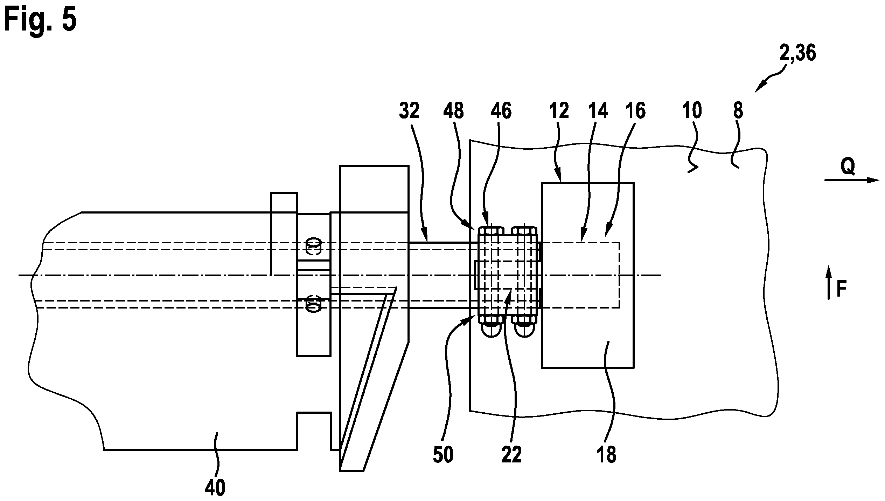

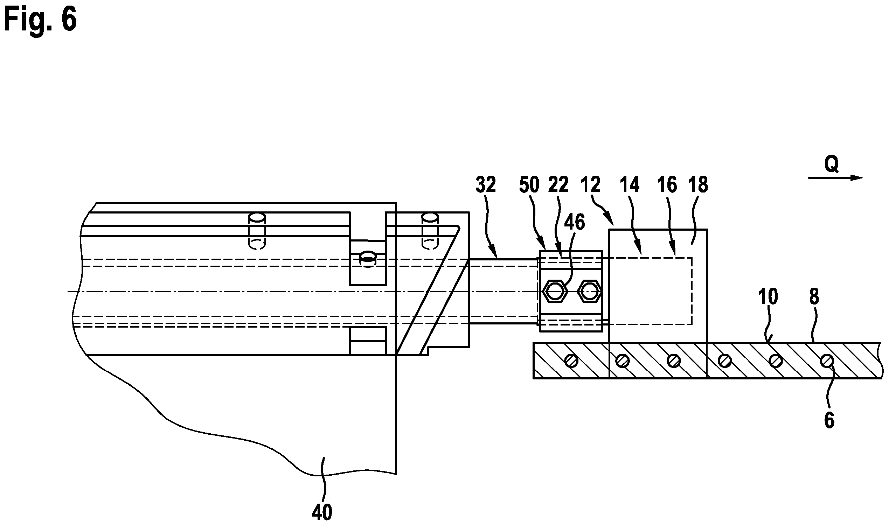

Wie es aus den Fig. 3, 4 rein beispielhaft zu entnehmen ist, ist es vorgesehen, dass jedes Stutzenpaar 40 von einem Stutzen 14 des ersten Förderbands 36 und einem Stutzen 14 des zweiten Förderbands 38 gebildet ist. Die Stutzen 14 eines jeden Stutzenpaars 40 sind zu einer zugehörigen, gemeinsamen Verbindungsachse 44 ausgerichtet angeordnet. Die Verbindungsachse 44 wird als eine gedachte oder geometrische Verbindungsachse 44 verstanden. Es ist also bevorzugt vorgesehen, dass die Verbindungsbereiche 22 der Stutzen 14 eines Stutzenpaars 42 zumindest im Wesentlichen koaxial zueinander ausgerichtet sind. Außerdem sind die Stirnseiten der Verbindungsbereiche 22 der Stutzen 14 eines Stutzenpaars 40 vorzugsweise derart voneinander beabstandet, dass der zugehörige Abstand zumindest im Wesentlichen der Länge eines Querträgers 32 entspricht. Zwischen den Stutzen 14 eines jeden Stutzenpaars 40 ist jeweils einer der Querträger 32 angeordnet und mit den Stutzen 14 des jeweiligen Stutzenpaars 40 kraftschlüssig und/oder

formschlüssig verbunden. Bei dieser Verbindung handelt es sich jeweils um eine lösbare Verbindung. Sie kann beispielsweise mittels Schrauben hergestellt sein. In diesem Zusammenhang wird auf die Fig. 5 und 6 verwiesen. Diese zeigen nun jeweils einen Teil des Ausschnitts aus den Fig. 3 bzw. 4, wobei der jeweilige Querträger 32 an den jeweiligen Verbindungsbereich 32 mittels Schrauben 46 gekoppelt ist. Außerdem ist in den Fig. 5 und 6 rein beispielhaft zumindest ein Teil einer Mitnehmertasche 40 gezeigt. Die Mitnehmertaschen 40 sind an den Querträgern 32 derart befestigt, dass sich von jedem Querträger 32 zu einem benachbarten Querträger 32 eine der Mitnehmertaschen 40 durchhängend erstreckt. Dies ist rein beispielhaft und schematisch aus der Fig. 2 zu entnehmen.

Aus den Fig. 5 und 6 ist außerdem zu entnehmen, dass es bevorzugt vorgesehen ist, dass ein Ende des Querträgers 32 und der gegenüberliegend angeordnete Verbindungsbereich 22 des zugehörigen Stutzens 12 formschlüssig ineinandergesteckt sind sowie kraft- und/oder formschlüssig, vorzugsweise mit Schrauben 46, miteinander verbunden sind. Das jeweilige Ende des Querträgers 32 kann also eine stirnseitige Bohrung aufweisen und/oder rohrförmig ausgebildet sein. In die entsprechende Öffnung fasst der Verbindungsbereich 22 des jeweiligen Stutzens 14 ein. Der Querschnitt der Öffnung des Endes des Querträgers 32 kann dazu korrespondierend und/oder ausgebildet für eine formschlüssige Verbindung zu bzw. mit dem Verbindungsbereich 22 ausgebildet sein.

Wie es beispielhaft aus der Fig. 7 zu entnehmen ist, ist ein jeweiliges Ende des Querträgers 32 beispielsweise korrespondierend zu der Form des Verbindungsbereichs 22 des Stutzens 14 ausgebildet, so dass eine formschlüssige Verbindung entsteht. Außerdem können das jeweilige Ende des Querträgers 32 und der Verbindungsbereich 22 des Stutzens 14 Bohrungen aufweisen, die fluchtend zueinander angeordnet sind. Somit ist es möglich, dass durch die fluchtenden Bohrungen eine Schraube 46 führt, um außerdem eine kraft- und/oder formschlüssige Verbindung zu erreichen.

Aus den Fig. 5, 6 und 7 sowie auch aus der Fig. 8 ist darüber hinaus ein weiteres Bauteil zu erkennen, das ringförmig um das jeweilige Ende des Querträgers 32 fasst. Hierbei handelt es sich vorzugsweise um eine Hülse 50. Die Hülse 50 kann also von einem ringförmigen oder rohrabschnittsförmigen Bauteil gebildet sein. Die Hülse 50 ist vorzugsweise als eine Stahlhülse ausgebildet. Die Hülse 50 weist ebenfalls Bohrungen in Radialrichtung auf. Diese sind vorzugsweise derart ausgebildet, dass die Hülse 50 über einen Überlappungsbereich zwischen dem Ende des Querträgers 32 und des Verbindungsbereichs 22 des Stutzens 14 geführt werden kann, so dass die Bohrungen der Hülse 50, des Endes des Querträgers 32 und des Verbindungsbereichs 22 des Stutzens 14 fluchtend zueinander angeordnet sind. In diesem Fall kann durch die fluchtenden Bohrungen ebenfalls Schrauben 46 geführt werden, mit denen eine Schraubenverbindung zwischen den besagten Bauteilen hergestellt ist.

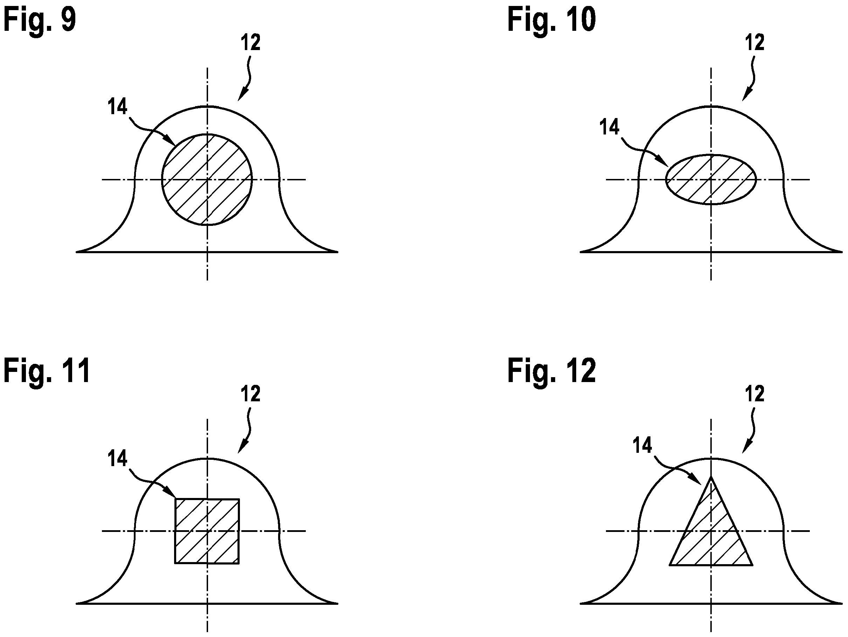

Schließlich wird auf die Fig. 9 bis 12 Bezug genommen. In jeder der Figuren ist ein Gummiblock 12 in einer schematischen Querschnittsansicht gezeigt. Die Gummiblöcke 12 unterscheiden sich durch die zugehörigen Stutzen 14. Denn diese können mit unterschiedlichen Querschnittsformen ausgebildet sein. So kann der Querschnitt eines Stutzens bzw. zugehörigen Verbindungsbereichs 22 beispielsweise kreisrundförmig, ellipsenrundförmig, rechteckig oder dreieckig ausgebildet sein.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Senkrechtförderer (4), aufweisend:
ein erstes und ein zweites Förderband (36, 38),
eine Mehrzahl von stabförmigen Querträgern (32), und
eine Mehrzahl von Mitnehmertaschen (40),
das erste und das zweite Förderband (36, 38) jeweils aufweisend:
Zugträger (6), die in das Förderband (2) eingebettet und zur Übertragung von Zugkräften in einer Förderrichtung F für das Förderband (2) ausgebildet sind,
eine von einer ersten Gummideckschicht (8) gebildeten Tragseite (10), und
mehrere mit der ersten Gummideckschicht (8) durch Vulkanisation stoffschlüssig verbundene Gummiblöcke (12),
wobei die Gummiblöcke (12) in Förderrichtung F voneinander beabstandet in einer Reihe angeordnet sind,
wobei die Mitnehmertaschen (40) an den Querträgern (32) derart befestigt sind, dass sich von jedem Querträger (32) zu einem benachbarten Querträger (32) eine der Mitnehmertaschen (40) durchhängend erstreckt,
**dadurch gekennzeichnet, dass**
jeder Gummiblock (12) einen stabförmigen Stutzen (14) aufweist, der sich von einem Verankerungsbereich (16) aus dem Inneren (18) des Gummiblocks (12) zu einem aus diesem herausragenden Teil (20) des jeweiligen Stutzens (14) erstreckt, wobei der herausragende Teil (20) des jeweiligen Stutzens (14) einen Verbindungsbereich (22) des zugehörigen Stutzens (14) bildet, welcher zum lösbaren Ankoppeln und/oder Verbinden eines Querträgers (32) des Senkrechtförderers (4) ausgebildet ist,
wobei das erste Förderband (36) parallel zu dem zweiten Förderband (38) angeordnet ist, so dass die Stutzen (14) des ersten Förderbands (36) und die Stutzen (14) des zweiten Förderbands (38) einander zugewandt und eine Vielzahl von Stutzenpaaren (42) gebildet sind,
wobei jedes Stutzenpaar (42) von einem Stutzen (14) des ersten Förderbands (36) und einem Stutzen (14) des zweiten Förderbands (38) gebildet ist,
wobei die Stutzen (14) eines jeden Stutzenpaars (42) zu einer zugehörigen, gemeinsamen Verbindungsachse (44) ausgerichtet angeordnet sind,
wobei zwischen den Stutzen (14) eines jeden Stutzenpaars (42) jeweils einer der Querträger (32) angeordnet und mit den Stutzen (14) kraft- und/oder formschlüssig lösbar verbunden ist.

2. Senkrechtförderer (4) nach dem vorhergehenden Anspruch, **dadurch gekennzeichnet, dass**
jeder Gummiblock (12) eine im Querschnitt glockenkurvenförmige oder gaußkurvenförmige Außenkontur aufweist.

3. Senkrechtförderer (4) nach einem der vorhergehenden Ansprüche, **dadurch gekennzeichnet, dass**
die Gummiblöcke (12) an einem Randbereich (26) auf der Tragseite (10) angeordnet sind.

4. Senkrechtförderer (4) nach einem der vorhergehenden Ansprüche, **dadurch gekennzeichnet, dass**
jeder Stutzen (14) in Querrichtung Q über einen Rand (28) der Tragseite (10) hinausragt.

5. Senkrechtförderer (4) nach einem der vorhergehenden Ansprüche, **dadurch gekennzeichnet, dass**
jeder Stutzen (14) als ein Metallstutzen ausgebildet ist.

6. Senkrechtförderer (4) nach einem der vorhergehenden Ansprüche, **dadurch gekennzeichnet, dass**
der Verankerungsbereich (16) eines jeden Stutzens (14) abstehende Verankerungselemente (30) aufweist, so dass zumindest eine formschlüssige Verbindung zwischen dem Verankerungsbereich (16) des jeweiligen Stutzens (14) und des zugehörigen Gummiblocks (12) gebildet ist.

7. Senkrechtförderer (4) nach einem der vorhergehenden Ansprüche, **dadurch gekennzeichnet, dass**
der Verbindungsbereich (22) eines jeden Stutzens (14) zur form- und/oder kraftschlüssigen Verbindung mit dem stabförmigen Querträger (32) des Senkrechtförderers (4) ausgebildet ist.

8. Senkrechtförderer (4) nach einem der vorhergehenden Ansprüche, **dadurch gekennzeichnet, dass**
die Gummiblöcke (12) in einem Rasterabstand mit äquidistanten Abständen (34) angeordnet sind.

9. Senkrechtförderer (4) nach einem der vorhergehenden Ansprüche, **dadurch gekennzeichnet, dass**
die Verbindungen zwischen den Querträgern (32) und den Stutzen (14) als Schraubenverbindungen ausgestaltet sind.

10. Senkrechtförderer (4) nach einem der vorhergehenden Ansprüche, **dadurch gekennzeichnet, dass**
jedes Ende eines Querträgers (32) und der gegenüberliegend angeordnete Verbindungsbereich (22) des zugehörigen Stutzen (14) mittels einer Hülse (50) gekoppelt sind, die mit dem jeweiligen Ende des Querträgers (32) und dem jeweiligen Verbindungsbereich (22) des zugehörigen Stutzens (14), insbesondere mittels Schrauben (46), lösbar verbunden ist.

11. Senkrechtförderer (4) nach einem der vorhergehenden Ansprüche, **dadurch gekennzeichnet, dass**
die Enden der Querträger (32) und die Verbindungsbereiche (22) der Stutzen (14) jeweils zumindest im Wesentlichen den gleichen Querschnitt aufweisen.

12. Senkrechtförderer (4) nach einem der vorhergehenden Ansprüche, **dadurch gekennzeichnet, dass**
jedes Ende eines Querträgers (32) und der gegenüberliegend angeordnete Verbindungsbereich (22) des zugehörigen Stutzens (14) formschlüssig ineinander gesteckt sind sowie kraft- und/oder formschlüssig, insbesondere mittels Schrauben (46), miteinander verbunden sind.

## Claims

1. Vertical conveyor (4), having:
a first and a second conveyor belt (36, 38),
a plurality of rod-shaped crossmembers (32), and
a plurality of entrainment pockets (40),
the first and second conveyor belts (36, 38) each having:
tension members (6) which are embedded in the conveyor belt (2) and designed for the transmission of tensile forces in a conveying direction F for the conveyor belt (2), a support side (10) formed by a first rubber cover layer (8) and a plurality of rubber blocks (12) connected to the first rubber cover layer (8) in a materially integral manner by vulcanization,
wherein the rubber blocks (12) are disposed so as to be spaced apart from one another in a row in the conveying direction F,
wherein the entrainment pockets (40) are attached to the crossmembers (32) in such a way that one of the entrainment pockets (40) extends from each crossmember (32) to an adjacent crossmember (32) in a sagging manner,
**characterized in that** each rubber block (12) has a rod-shaped fitting (14), which extends from an anchoring region (16) from the interior (18) of the rubber block (12) to a protruding part (20) of the respective fitting (14), wherein the protruding part (20) of the respective fitting (14) forms a connection region (22) of the associated fitting (14), which is designed for releasably coupling and/or connecting a crossmember (32) of the vertical conveyor (4),
wherein the first conveyor belt (36) is disposed parallel to the second conveyor belt (38), so that the fittings (14) of the first conveyor belt (36) and the fittings (14) of the second conveyor belt (38) are facing each other and a plurality of pairs of fittings (42) are formed,
wherein each pair of fittings (42) is formed by a fitting (14) of the first conveyor belt (36) and a fitting (14) of the second conveyor belt (38),
wherein the fittings (14) of each pair of fittings (42) are disposed so as to be aligned with an associated common connecting axis (44),
wherein one of the crossmembers (32) is in each case disposed between the fittings (14) of each pair of fittings (42) and releasably connected to the fittings (14) in a force-fitting and/or form-fitting manner.

2. Vertical conveyor (4) according to the preceding claim, **characterized in that** each rubber block (12) has a bell-shaped or Gaussian-shaped outer contour when viewed in the cross section.

3. Vertical conveyor (4) according to one of the preceding claims, **characterized in that**
the rubber blocks (12) are disposed on a peripheral region (26) on the support side (10).

4. Vertical conveyor (4) according to one of the preceding claims, **characterized in that**
each fitting (14) protrudes beyond one periphery (28) of the support side (10) in the transverse direction Q.

5. Vertical conveyor (4) according to one of the preceding claims, **characterized in that**
each fitting (14) is designed as a metal fitting.

6. Vertical conveyor (4) according to one of the preceding claims, **characterized in that**
the anchoring region (16) of each fitting (14) has protruding anchoring elements (30), so that at least one form-fitting connection is formed between the anchoring region (16) of the respective fitting (14) and of the associated rubber block (12).

7. Vertical conveyor (4) according to one of the preceding claims, **characterized in that**
the connection region (22) of each fitting (14) is designed for a form-fit and/or force-fit connection to the rod-shaped crossmember (32) of the vertical conveyor (4).

8. Vertical conveyor (4) according to one of the preceding claims,
**characterized in that**
the rubber blocks (12) are disposed in a grid pattern with equidistant spacings (34).

9. Vertical conveyor (4) according to one of the preceding claims,
**characterized in that**
the connections between the crossmembers (32) and the fittings (14) are designed as screw connections.

10. Vertical conveyor (4) according to one of the preceding claims,
**characterized in that**
each end of a crossmember (32) and the opposite connection region (22) of the associated fitting (14) are coupled by means of a sleeve (50) which is releasably connected to the respective end of the crossmember (32) and the respective connection region (22) of the associated fitting (14), in particular by means of screws (46).

11. Vertical conveyor (4) according to one of the preceding claims,
**characterized in that**
the ends of the crossmembers (32) and the connection regions (22) of the fittings (14) each have at least substantially the same cross section.

12. Vertical conveyor (4) according to one of the preceding claims,
**characterized in that**
each end of a crossmember (32) and the opposite connection region (22) of the associated fitting (14) are inserted into one another in a form-fitting manner and are connected to one another in a force-fitting and/or form-fitting manner, in particular by means of screws (46).

## Revendications

1. Transporteur vertical (4), présentant :
une première et une deuxième bande transporteuse (36, 38),
une pluralité de supports transversaux en forme de barre (32), et
une pluralité de poches d'entraînement (40),
la première et la deuxième bande transporteuse (36, 38) présentant respectivement :
des supports de traction (6) qui sont encastrés dans la bande transporteuse (2) et qui sont configurés pour transmettre des forces de traction dans une direction de transport F pour la bande transporteuse (2), un côté porteur (10) formé par une première couche de revêtement en caoutchouc (8), et plusieurs blocs de caoutchouc (12) reliés par liaison de matière par vulcanisation à la première couche de revêtement en caoutchouc (8),
les blocs de caoutchouc (12) étant agencés en une rangée, espacés les uns des autres dans la direction de transport F,
les poches d'entraînement (40) étant fixées aux supports transversaux (32) de telle sorte que l'une des poches d'entraînement (40) s'étend en fléchissement de chaque support transversal (32) à un support transversal (32) voisin, **caractérisé en ce que** chaque bloc de caoutchouc (12) présente un embout (14) en forme de barre, qui s'étend depuis une zone d'ancrage (16) à partir de l'intérieur (18) du bloc de caoutchouc (12) jusqu'à une partie (20) de l'embout respectif (14) qui fait saillie à partir de celui-ci, la partie saillante (20) de l'embout respectif (14) formant une zone de liaison (22) de l'embout associé (14) qui est configurée pour coupler et/ou relier de manière amovible un support transversal (32) du transporteur vertical (4),
la première bande transporteuse (36) étant agencée parallèlement à la deuxième bande transporteuse (38), de telle sorte que les embouts (14) de la première bande transporteuse (36) et les embouts (14) de la deuxième bande transporteuse (38) se font face et qu'une pluralité de paires d'embouts (42) sont formées, chaque paire d'embouts (42) étant formée par un embout (14) de la première bande transporteuse (36) et un embout (14) de la deuxième bande transporteuse (38),
les embouts (14) de chaque paire d'embouts (42) étant agencés en alignement avec un axe de liaison commun associé (44),
l'un des supports transversaux (32) étant respectivement agencé entre les embouts (14) de chaque paire d'embouts (42) et étant relié de manière amovible aux embouts (14) par adhérence et/ou par complémentarité de formes.

2. Transporteur vertical (4) selon la revendication précédente, **caractérisé en ce que**
chaque bloc de caoutchouc (12) présente un contour extérieur en forme de courbe en cloche ou en forme de courbe gaussienne dans la section transversale.

3. Transporteur vertical (4) selon l'une quelconque des revendications précédentes, **caractérisé en ce que**
les blocs de caoutchouc (12) sont agencés sur une zone de bord (26) sur le côté porteur (10).

4. Transporteur vertical (4) selon l'une quelconque des revendications précédentes, **caractérisé en ce que**
chaque embout (14) fait saillie dans la direction transversale Q au-delà d'un bord (28) du côté porteur (10).

5. Transporteur vertical (4) selon l'une quelconque des revendications précédentes, **caractérisé en ce que**
chaque embout (14) est configuré sous la forme d'un embout métallique.

6. Transporteur vertical (4) selon l'une quelconque des revendications précédentes, **caractérisé en ce que**
la zone d'ancrage (16) de chaque embout (14) présente des éléments d'ancrage (30) qui dépassent, de telle sorte qu'au moins une liaison par complémentarité de formes est formée entre la zone d'ancrage (16) de l'embout (14) respectif et le bloc de caoutchouc (12) associé.

7. Transporteur vertical (4) selon l'une quelconque des revendications précédentes, **caractérisé en ce que**
la zone de liaison (22) de chaque embout (14) est configurée pour être reliée par complémentarité de formes et/ou par adhérence au support transversal (32) en forme de barre du transporteur vertical (4).

8. Transporteur vertical (4) selon l'une quelconque des revendications précédentes, **caractérisé en ce que**
les blocs de caoutchouc (12) sont agencés selon un intervalle de grille avec des intervalles équidistants (34).

9. Transporteur vertical (4) selon l'une quelconque des revendications précédentes, **caractérisé en ce que**
les liaisons entre les supports transversaux (32) et les embouts (14) sont conçues sous forme de liaisons par vis.

10. Transporteur vertical (4) selon l'une quelconque des revendications précédentes, **caractérisé en ce que**
chaque extrémité d'un support transversal (32) et la zone de liaison (22), agencée en face, de l'embout (14) associé sont couplées au moyen d'une douille (50) qui est reliée de manière amovible à l'extrémité respective du support transversal (32) et à la zone de liaison (22) respective de l'embout (14) associé, notamment au moyen de vis (46).

11. Transporteur vertical (4) selon l'une quelconque des revendications précédentes, **caractérisé en ce que**
les extrémités des supports transversaux (32) et les zones de liaison (22) des embouts (14) présentent chacune au moins essentiellement la même section transversale.

12. Transporteur vertical (4) selon l'une quelconque des revendications précédentes, **caractérisé en ce que**
chaque extrémité d'un support transversal (32) et la zone de liaison (22), agencée en face, de l'embout (14) associé sont emboîtées l'une dans l'autre par complémentarité de formes et sont reliées entre elles par adhérence et/ou par complémentarité de formes, notamment au moyen de vis (46).
